# EUROPEAN PATENT APPLICATION

(11) **EP 4 475 613 A1**
(43) Date of publication of application: **11.12.2024**
(21) Application number: 23749545.2
(22) Date of filing: 20.01.2023
(51) Int. Cl.: H04W 72/20, H04W 16/28, H04W 28/16, H04W 52/42, H04W 72/044, H04W 72/0446, H04W 84/12

(54) **COMMUNICATION DEVICE AND COMMUNICATION METHOD**

(30) Priority: 04.02.2022 JP 2022016414
(71) Applicant: Panasonic Intellectual Property Corporation of America, Torrance, CA 90504 (US)
(72) Inventor: MINOTANI, Jun, Sendai-shi, Miyagi 981-3206 (JP); URABE, Yoshio, Kadoma-shi, Osaka 571-0057 (JP); MOTOZUKA, Hiroyuki, Kadoma-shi, Osaka 571-0057 (JP); IWAI, Takashi, Sendai-shi, Miyagi 981-3206 (JP); TAKATA, Tomofumi, Sendai-shi, Miyagi 981-3206 (JP); HASHI, Ryutaro, Sendai-shi, Miyagi 981-3206 (JP)
(74) Representative: Grünecker Patent- und Rechtsanwälte PartG mbB
(86) International application number: PCT/JP2023/001631
(87) International publication number: WO 2023/149229

(57) **Abstract**

This communication device includes: a control circuit that negotiates with another communication device in order to determine a spatial stream used for coordinated transmission; and a communication circuit for performing coordinated transmission with the other communication device. On the basis of information pertaining to the spatial stream obtained in the negotiation, the control circuit orthogonalizes a reference signal included in the coordinated communication signal.

## Description

### Technical Field

The present disclosure relates to a communication apparatus and a communication method.

### Background Art

A task group (TG) is developing technical specifications for IEEE 802.11be as a successor standard of IEEE 802. 11ax, which is a standard of the Institute of Electrical and Electronics Engineers (IEEE) 802.11. In IEEE 802.11be, multi-AP coordination, where a plurality of access points communicates data with each of non-AP stations in a coordinated manner, is being discussed. Coordinated spatial reuse, which is easy to configure, is being examined as a type of multi-AP coordination (e.g., refer to NPL 1).

In the following description, IEEE 802.11ax will also be referred to as 11ax or HE (high efficiency). IEEE 802.11be will also be referred to as 11be or EHT (extreme high throughput). An access point will also be referred to as an AP. A non-AP station will also be referred to as an STA or a terminal. Multi-AP will also be referred to as MAP. Coordinated spatial reuse will also be referred to as C-SR.

APs and STAs may be referred to as communication apparatuses. Multi-AP coordination may be referred to as multi-AP coordinated transmission, multi-AP coordinated reception, multi-AP coordinated communication, coordinated transmission, coordinated reception, or coordinated communication.

### Citation List

### Non-Patent Literature

NPL 1
   IEEE 802.11-19/1534r1, Coordinated Spatial Reuse Performance Analysis
NPL 2
   IEEE 802.11-20/0033r1, Coordinated Spatial Reuse operation
NPL 3
   IEEE 802.11-20/1040r2, Coordinated Spatial Reuse: Extension to Uplink

### Summary of Invention

When a plurality of communication apparatuses performs coordinated transmission, reference signals included in signals subjected to the coordinated transmission might interfere with each other. When a first communication apparatus and a second communication apparatus transmit signals in coordinated transmission, for example, a reference signal included in the signal transmitted by the first communication apparatus and a reference signal included in the signal transmitted by the second communication apparatus might overlap and interfere with each other.

Non-limiting embodiments of the present disclosure contribute to providing a communication apparatus and a communication method that suppress interference between reference signals in coordinated transmission.

A communication apparatus according to one example of the present disclosure includes: a control circuit that negotiates with another communication apparatus in order to determine a spatial stream to be used in coordinated transmission; and a communication circuit that performs the coordinated transmission with the other communication apparatus, in which the control circuit orthogonalizes a reference signal included in a signal in the coordinated transmission based on information regarding the spatial stream obtained through the negotiation.

A communication method according to one example of the present disclosure includes: negotiating with another communication apparatus in order to determine a spatial stream to be used in coordinated transmission; and orthogonalizing a reference signal included in a signal in the coordinated transmission based on information regarding the spatial stream obtained through the negotiating.

A communication apparatus according to one example of the present disclosure includes: a control circuit that determines transmission timing of a second reference signal such that a first reference signal included in a coordinated transmission signal transmitted by the communication apparatus and the second reference signal do not overlap each other, the second reference signal being included in a coordinated transmission signal transmitted by another communication apparatus; and a communication circuit that transmits information regarding the determined transmission timing to the other communication apparatus.

A communication method according to one example of the present disclosure is a method used by a communication apparatus, the communication method including: determining transmission timing of a second reference signal such that a first reference signal included in a coordinated transmission signal transmitted by the communication apparatus and the second reference signal do not overlap each other, the second reference signal being included in a coordinated transmission signal transmitted by another communication apparatus; and transmitting information regarding the determined transmission timing to the other communication apparatus.

A communication apparatus according to one example of the present disclosure includes: a control circuit that determines a sequence to be added to a reference signal included in a coordinated transmission signal; and a communication circuit that transmits information regarding the determined sequence to another communication apparatus.

A communication method according to one example of the present disclosure includes: determining a sequence to be added to a reference signal included in a coordinated transmission signal; and transmitting information regarding the determined sequence to another communication apparatus.

It should be noted that general or specific embodiments may be implemented as a system, an apparatus, a method, an integrated circuit, a computer program, or a storage medium, or any selective combination of a system, an apparatus, a method, an integrated circuit, a computer program, and a storage medium.

According to an embodiment of the present disclosure, interference between reference signals can be suppressed in coordinated transmission performed by communication apparatuses.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 is a diagram illustrating an example of C-SR;
FIG. 2 is a diagram illustrating an example of control in TF-based C-SR;
FIG. 3 is a diagram illustrating another example of the control in TF-based C-SR;
FIG. 4 is a diagram illustrating an example of interference between reference signals;
FIG. 5 is a diagram illustrating an example of configuration of a communication system according to Embodiment 1;
FIG. 6 is a sequence diagram illustrating an example of operation of the communication system;
FIG. 7 is a diagram illustrating an example of a block configuration of a communication apparatus;
FIG. 8 is a diagram illustrating an example of a block configuration of another communication apparatus;
FIG. 9 is a diagram illustrating an example of spatial stream allocation in spatial division C-SR;
FIG. 10 is a diagram illustrating an example of a determination of reference signals and an orthogonal matrix;
FIG. 11 is a diagram illustrating an example of common information of a TF;
FIG. 12 is a diagram illustrating an example of user information of the TF;
FIG. 13 is a diagram illustrating an example of common information of a multi-AP TF;
FIG. 14 is a diagram illustrating an example of configuration of a communication system according to Variation 1;
FIG. 15 is a diagram illustrating an example of a signal for notifying of capability information;
FIG. 16 is a diagram illustrating an example of a transmission power table;
FIG. 17 is a diagram illustrating an example of a negotiation of spatial stream information for each of frequency resources;
FIG. 18 is a sequence diagram illustrating an example of operation of a communication system according to Embodiment 2;
FIG. 19 is a diagram illustrating an example of a block diagram of a communication apparatus;
FIG. 20 is a diagram illustrating an example of a block configuration of another communication apparatus;
FIG. 21 is a diagram illustrating an example of a change of transmission timing using a TF according to Embodiment 3;
FIG. 22 is a diagram illustrating an example of user information of a TF;
FIG. 23 is a diagram illustrating an example of timing of frames;
FIG. 24 is a diagram illustrating an example of user information of a TF;
FIG. 25 is a diagram illustrating an example of a C-SR announcement frame;
FIG. 26 is a diagram illustrating an example of a C-SR signal;
FIG. 27 is a diagram illustrating an example of user information of a TF according to Embodiment 4; and
FIG. 28 is a diagram illustrating an example of a C-SR signal.

### Description of Embodiments

Embodiments of the present invention will be described below in detail with reference to the accompanying drawings as appropriate. It is, however, noted that a description made in detail more than necessary is omitted in some cases. For example, a detailed description of an already well-known item and a duplicate description of substantially the same configuration are omitted in some cases. The reason for this is to prevent the following description from being unnecessarily redundant and allow a person skilled in the art to readily understand the present disclosure.

The accompanying drawings and the following descriptions are provided to allow a person skilled in the art to fully understand the present disclosure and are not intended to limit the subject set forth in the appended claims.

### <Embodiment 1>

### <C-SR>

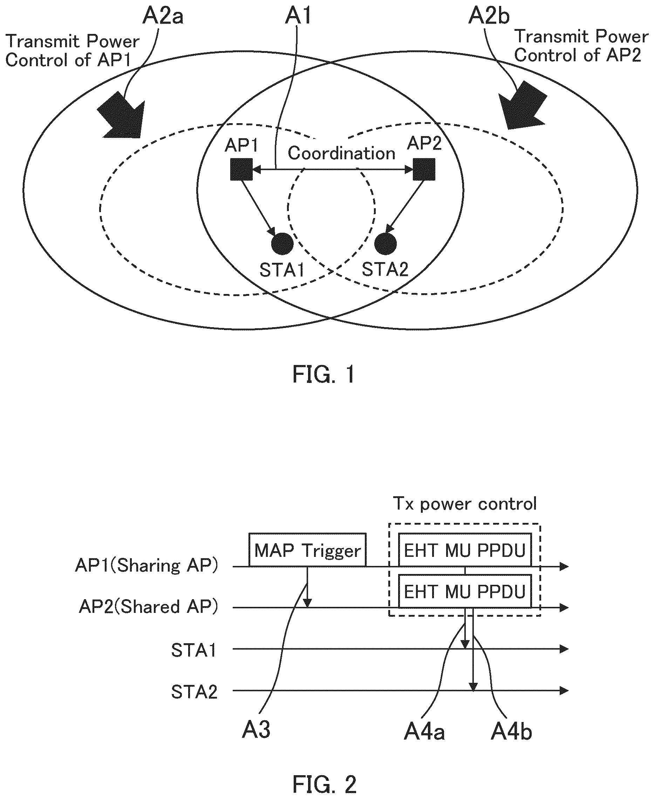

FIG. 1 is a diagram illustrating an example of C-SR. FIG. 1 illustrates a communication system including AP1, AP2, STA1, and STA2.

AP1 is, for example, an AP that obtains a transmission opportunity (TXOP) and that starts multi-AP coordinated transmission. An AP that starts multi-AP coordinated transmission may be referred to as a sharing AP. In FIG. 1, AP1 is a sharing AP.

AP2 is an AP subjected to coordinated control performed by the sharing AP. An AP subjected to coordinated control may be referred to as a shared AP. In FIG. 1, AP2 is a shared AP.

In FIG. 1, STA1 is associated (connected) with AP1 and belongs to a basic service set (BSS) 1. STA2 is associated with AP2 and belongs to BSS2.

In C-SR, AP/STAs perform coordinated control relating to transmission power between APs in such a way as to suppress interference with AP/STAs belonging to another BSS (overlapping BSS (OBSS)) while maintaining communication quality in a BSS thereof.

For example, AP1 and AP2 perform coordinated control relating to transmission power as indicated by an arrow A1 in FIG. 1. AP1 controls transmission power through the coordinated control with AP2 as indicated by, for example, an arrow A2a in FIG. 1, and AP2 controls transmission power through the coordinated control with AP1 as indicated by, for example, an arrow A2b in FIG. 1.

As a result, since, in C-SR, common transmission resources (e.g., frequency resources and spatial resources) can be simultaneously used between a plurality of BSSs, system throughput improves.

Synchronous transmission C-SR based on a trigger frame is examined as one of control methods in C-SR. A trigger frame will also be referred to as a TF hereinafter.

FIG. 2 is a diagram illustrating an example of control in TF-based C-SR. FIG. 2 illustrates an example of control in TF-based C-SR for a downlink (e.g., refer to NPL 2). A downlink will also be referred to as a DL.

In DL TF-based C-SR, a sharing AP transmits an MAP TF to a shared AP (refer to an arrow A3 in FIG. 2). The MAP TF includes transmission timing information regarding a DL transmission signal such as an EHT MU PPDU and transmission power information in each AP.

Each AP transmits a DL transmission signal to each STA in accordance with the transmission timing information and the transmission power information specified in the MAP TF (refer to arrows A4a and A4b in FIG. 2). As a result, transmission timing and transmission power of the DL transmission signal transmitted from each AP are subjected to coordinated control.

An EHT MU PPDU is an acronym of an EHT multi-user (MU) physical layer convergence procedure protocol data unit (PPDU).

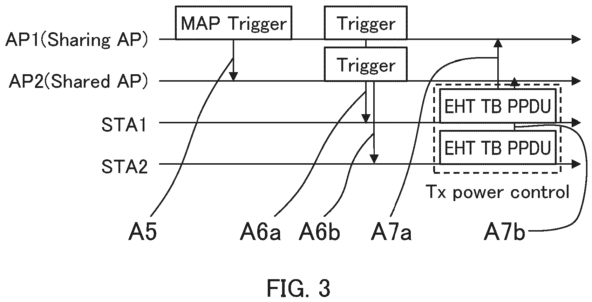

FIG. 3 is a diagram illustrating another example of the control in TF-based C-SR. FIG. 3 illustrates an example of control in TF-based C-SR for an uplink (e.g., refer to NPL 3). An uplink will also be referred to as a UL.

In UL TF-based C-SR, a sharing AP transmits an MAP TF to the shared AP (refer to an arrow A5 in FIG. 3). The MAP TF includes transmission timing information regarding a TF transmitted from each AP to each STA and transmission power information regarding a UL transmission signal such as an EHT trigger-based PPDU in each STA.

Each AP transmits a TF to each STA (refer to arrows A6a and 6b in FIG. 3). The TF includes transmission timing information regarding a UL transmission signal and transmission power information regarding the UL transmission signal specified in the MAP TF.

Each STA transmits a UL transmission signal to each AP in accordance with the transmission timing information and the transmission power information specified in the TF (refer to arrows A7a and A7b in FIG. 3). As a result, transmission timing and transmission power of the UL transmission signal transmitted from each STA is subjected to coordinated control.

Although FIGS. 2 and 3 illustrate examples where the sharing AP performs C-SR transmission (multi-AP coordinated transmission based on C-SR) along with the shared AP, an operation performed is not limited to this. For example, the sharing AP may notify the shared AP of control information regarding C-SR transmission without performing C-SR transmission, instead. That is, a plurality of shared AP, not the sharing AP, may perform C-SR transmission, instead.

### interference between Reference Signals>

When a plurality of AP/STAs simultaneously transmits signals in TF-based C-SR, a reference signal such as EHT-long training fields (LTFs) or a non-legacy LTF might interfere with a reference signal included in another signal.

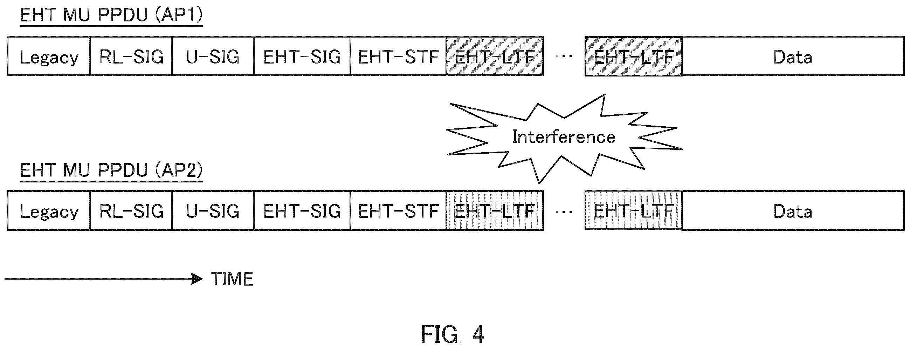

FIG. 4 is a diagram illustrating an example of interference between reference signals. FIG. 4 illustrates an EHT MU PPDU transmitted by AP 1 and an EHT MU PPDU transmitted by AP2. In FIG. 4, a horizontal direction represents time.

In TF-based C-SR, AP1 and AP2 might simultaneously transmit EHT MU PPDUs. As illustrated in FIG. 4, therefore, a reference signal EHT-LTF included in the EHT MU PPDU transmitted by AP1 and a reference signal EHT-LTF included in the EHT MU PPDU transmitted by AP2 might overlap and interfere with each other. In the case of a UL, too, reference signals might interfere with each other.

When a plurality of AP/STAs transmits TF-based C-SR, a reference signal included in a C-SR signal, such as an EHT PPDU, is determined on the basis of the number of spatial streams of the signal transmitted by each AP/STA. Simultaneously transmitted C-SR signals, therefore, might include the same reference signal, thereby causing phase rotation. Phase rotation might deteriorate accuracy of channel estimation performed by a receiver using a reference signal. Suppression of interference between reference signals, therefore, is important in multi-AP coordinated transmission such as C-SR.

### <Example of System Configuration>

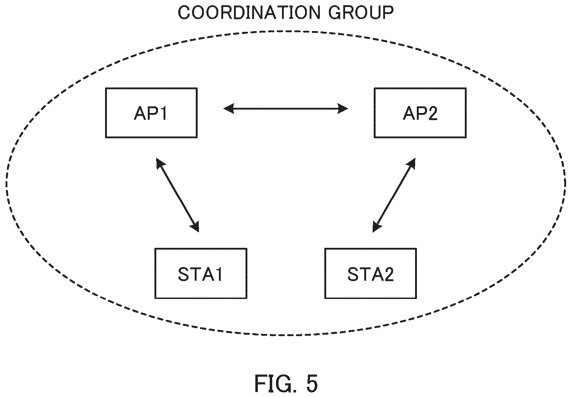

FIG. 5 is a diagram illustrating an example of configuration of a communication system according to Embodiment 1. The communication system includes AP1, AP2, STA1, and STA2.

The radio communication system includes a coordination group for performing multi-AP coordinated transmission. The coordination group may include a plurality of APs and a plurality of STAs. In FIG. 5, the coordination group includes AP1, AP2, STA1, and STA2.

In DL communication, AP1 and AP2 correspond to DL radio transmission apparatuses, and STA1 and STA2 correspond to DL radio reception apparatuses. An AP transmits a DL signal to the other AP or one of the STAs.

In UL communication, AP1 and AP2 correspond to UL radio reception apparatuses, and STA1 and STA2 correspond to UL radio transmission apparatuses. An STA transmits a UL signal to one of the APs on the basis of a signal received from the AP.

The communication system illustrated in FIG. 5 performs multi-AP coordinated transmission. For example, AP1 and AP2 communicate control signals relating to the multi-AP coordinated transmission and negotiate information regarding spatial streams to be used in DL multi-AP coordinated transmission.

### <Example of Sequence>

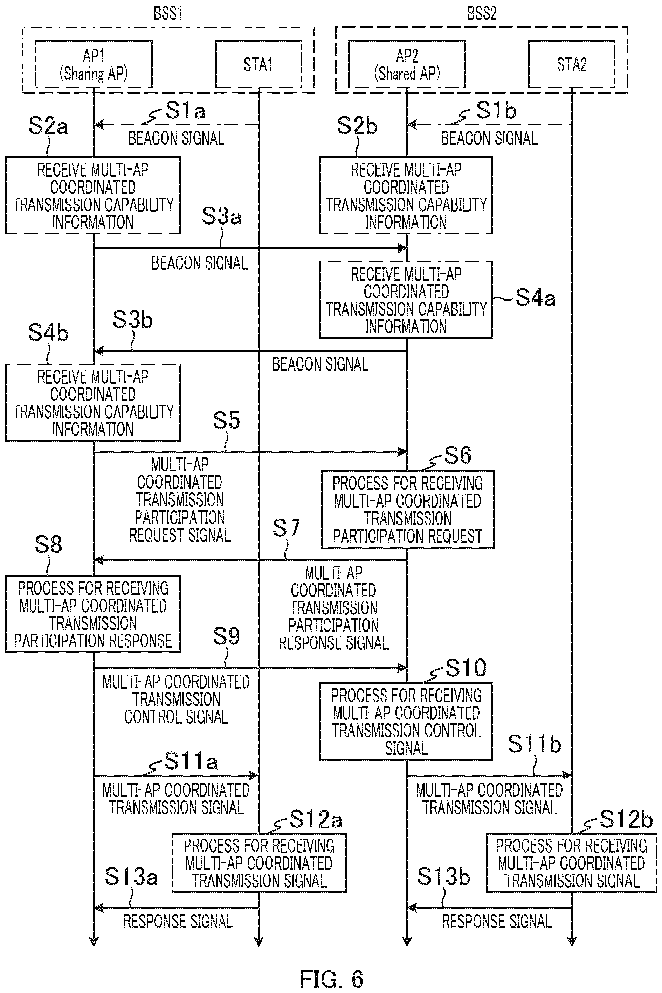

FIG. 6 is a sequence diagram illustrating an example of operation of the communication system. It is assumed in FIG. 6 that BSS 1 includes AP1 and STA1 and BSS2 includes AP2 and STA2. In the following description, when AP1 and AP2 are not distinguished from each other, each of AP1 and AP2 will also be referred to as an AP. When STA1 and STA2 are not distinguished from each other, each of STA1 and STA2 will also be referred to as an STA.

An STA transmits a beacon signal including multi-AP coordinated transmission capability information to an AP belonging to the same BSS (S1a and S1b).

A signal including multi-AP coordinated transmission capability information is not limited to a beacon signal. For example, the multi-AP coordinated transmission capability information may be included in an association signal transmitted from the STA to the AP, instead.

The AP performs a process for receiving the beacon signal transmitted from the STA to receive the multi-AP coordinated transmission capability information included in the beacon signal (S2a and S2b). The AP holds, in a buffer on the basis of the multi-AP coordinated transmission capability information, a multi-AP coordinated transmission method (a type of multi-AP coordinated transmission) in which the STA can participate.

The AP transmits a beacon signal including the multi-AP coordinated transmission capability information to the other AP belonging to the same coordination group (S3a and S3b).

The AP performs a process for receiving the beacon signal transmitted from the other AP belonging to the same coordination group to receive the multi-AP coordinated transmission capability information included in the beacon signal (S4a and S4b). The AP holds, in the buffer on the basis of the multi-AP coordinated transmission capability information, the multi-AP coordinated transmission method in which the AP can participate.

Here, AP1 obtains a TXOP and operates as a sharing AP that takes the initiative in multi-AP coordinated transmission. AP1 transmits a multi-AP coordinated transmission participation request signal to AP2 (S5).

AP2 performs a process for receiving the multi-AP coordinated transmission participation request signal (S6) and determines whether to participate in the multi-AP coordinated transmission on the basis of the capability information (capability) regarding the multi-AP coordinated transmission.

AP2 transmits a multi-AP coordinated transmission participation response signal including a result of the determination as to the participation to AP1 (S7). At this time, AP2 may include request information regarding the multi-AP coordinated transmission method in the multi-AP coordinated transmission participation response signal. When AP2 includes spatial division C-SR, which will be described later, in the request information, AP2 may include information regarding the number of spatial streams to be used in the multi-AP coordinated transmission in the request information.

AP1 performs a process for receiving the multi-AP coordinated transmission participation response signal (S8), determines a multi-AP coordinated transmission method from the information regarding the AP that can participate in the multi-AP coordinated transmission, and schedules coordination signals. The multi-AP coordinated transmission method may be spatial division C-SR, which will be described later, C-SR, joint transmission (JT), coordinated beamforming (CBF), coordinated orthogonal frequency-division multiple access (COFDMA), coordinated time-division multiple access (CTDMA), coordinated MIMO (CMIMO), or the like.

AP1 transmits a multi-AP coordinated transmission control signal including a result of the scheduling to AP2 (S9).

The multi-AP coordinated transmission control signal includes, for example, address information regarding a multi-AP coordinated transmission signal, resource information regarding resources available to each AP, information regarding weighting on amplitude and a phase of the coordinated transmission signal, transmission signal power information, and transmission timing information. A multi-AP coordinated transmission control signal relating to spatial division C-SR, which will be described later, includes transmission signal power information and available spatial stream information.

The resource information may be frequency resource information and time resource information. The information regarding weighting on amplitude and a phase of a coordinated transmission signal may be referred to as steering, spatial mapping, or transmission precoding.

AP2 receives the multi-AP coordinated transmission control signal transmitted from AP1 (S10).

The AP transmits a multi-AP coordinated transmission signal (e.g., an MU PPDU) to the STA in accordance with transmission timing, the resource information, and the like included in the multi-AP coordinated transmission control signal (S11a and S11b).

The STA performs a process for receiving the multi-AP coordinated transmission signal (S12a and S12b).

When there is no error in the received signal, the STA transmits a response signal (e.g., an acknowledge (ACK) or a block ACK (BA)) to the AP that has transmitted the multi-AP coordinated transmission signal (S13a and S13b).

### <Example of Block Configuration of Communication Apparatus>

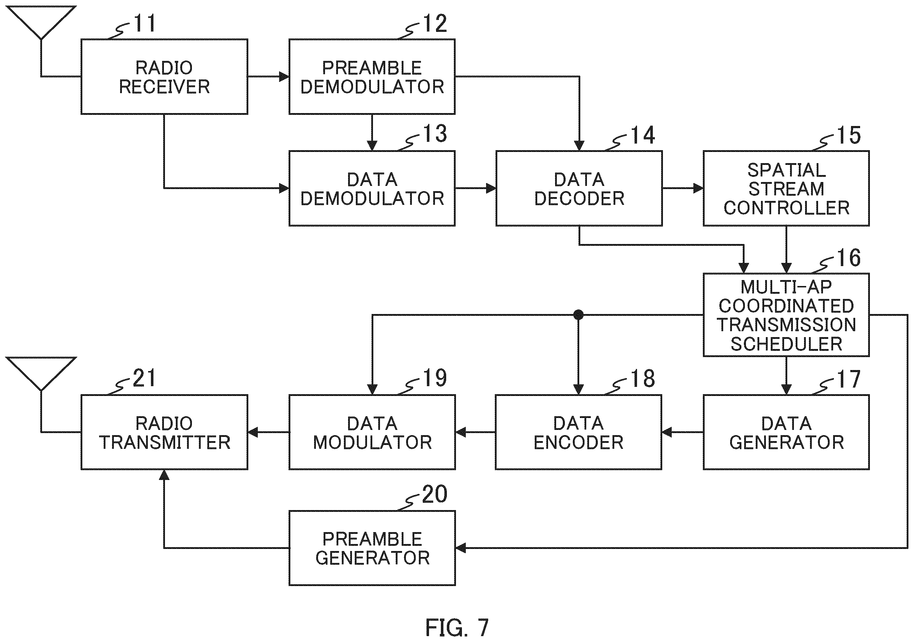

FIG. 7 is a diagram illustrating an example of a block configuration of a communication apparatus. The communication apparatus having the example of the block configuration illustrated in FIG. 7 is, for example, a DL radio transmission apparatus such as an AP.

Radio receiver 11 receives a signal transmitted from a DL radio transmission apparatus or a DL radio reception apparatus (e.g., an STA) through an antenna and performs a radio reception process including down-conversion and analog-to-digital (A/D) conversion. Radio receiver 11 divides the signal subjected to the radio reception process into a preamble (also referred to as a preamble signal) and data (also referred to as a data signal) and outputs the preamble signal to preamble demodulator 12 and the data signal to data demodulator 13.

Preamble demodulator 12 performs a fast Fourier transform (FFT) on the preamble signal output from radio receiver 11 to extract reception control information to be used to demodulate and decode the data signal. The reception control information includes, for example, information such as frequency bandwidth (BW), modulation and coding scheme (MCS), and an error correcting code.

Preamble demodulator 12 also performs channel estimation on the basis of a reference signal (e.g., a non-legacy LTF) included in the preamble signal to obtain a channel estimation value. Preamble demodulator 12 outputs the reception control information to data demodulator 13 and data decoder 14 and the channel estimation value to data demodulator 13.

Data demodulator 13 performs an FFT on the data signal output from radio receiver 11 and demodulates the data signal using the reception control information and the channel estimation value output from preamble demodulator 12. Data demodulator 13 outputs the demodulated data signal to data decoder 14.

Data decoder 14 decodes the demodulated data signal output from data demodulator 13 using the reception control information output from preamble demodulator 12. Data decoder 14 performs an error check on the decoded data signal using a method such as cyclic redundancy check (CRC). When there is no error in the decoded data signal, data decoder 14 outputs the decoded data signal to spatial stream controller 15 and multi-AP coordinated transmission scheduler 16.

When there is no error in the decoded data and the decoded data includes spatial stream information regarding multi-AP coordinated transmission, data decoder 14 outputs the spatial stream information to spatial stream controller 15. The spatial stream information includes, for example, capability information regarding spatial streams and spatial stream numbers available in each multi-AP coordinated transmission method.

When the decoded data signal output from data decoder 14 includes capability information regarding spatial streams in multi-AP coordinated transmission, spatial stream controller 15 determines spatial stream numbers available to another AP in multi-AP coordinated transmission and outputs the spatial stream numbers to multi-AP coordinated transmission scheduler 16.

When the decoded data signal output from data decoder 14 includes available spatial stream information, spatial stream controller 15 saves the available spatial stream information in a buffer.

When the decoded data signal output from data decoder 14 includes information for requesting transmission based on multi-AP coordinated transmission, spatial stream controller 15 outputs the available spatial stream information saved in the buffer to multi-AP coordinated transmission scheduler 16.

Multi-AP coordinated transmission scheduler 16 determines scheduling information regarding the coordinated transmission. For example, multi-AP coordinated transmission scheduler 16 determines a multi-AP coordinated transmission method, user information regarding users who participate in the coordinated transmission, resource information regarding resources available to each user (e.g., frequency resources and spatial stream resources), transmission power information, MCS, and an error correcting code.

Multi-AP coordinated transmission scheduler 16 also determines allocation of spatial streams to each of APs that participate in the multi-AP coordinated transmission on the basis of spatial stream numbers available to the AP in the coordinate transmission, the spatial stream numbers being output from spatial stream controller 15.

Multi-AP coordinated transmission scheduler 16 also determines allocation of spatial streams to be used by the DL radio transmission apparatus in FIG. 7 in the multi-AP coordinated transmission on the basis of the available spatial stream information output from spatial stream controller 15.

Multi-AP coordinated transmission scheduler 16 outputs coordination signal scheduling information to data generator 17, data encoder 18, data modulator 19, and preamble generator 20.

Data generator 17 generates a data sequence to be transmitted to a DL radio transmission apparatus or a DL radio reception apparatus on the basis of the coordination signal scheduling information output from multi-AP coordinated transmission scheduler 16. The data sequence to be transmitted to the DL radio transmission apparatus includes, for example, a beacon signal including multi-AP coordinated transmission capability information, a multi-AP coordinated transmission participation request signal, a multi-AP coordinated transmission participation response signal, and a multi-AP coordinated transmission control signal. The data sequence to be transmitted to the DL radio reception apparatus includes, for example, a multi-AP coordinated transmission signal. Data generator 17 transmits the generated data sequence to data encoder 18.

Data encoder 18 encodes the data sequence output from data generator 17 on the basis of the coordination signal scheduling information output from multi-AP coordinated transmission scheduler 16 and outputs the encoded data to data modulator 19.

Data modulator 19 performs demodulation and an inverse Fourier transform (IFFT) on the encoded data signal output from data encoder 18 on the basis of the coordination signal scheduling information output from multi-AP coordinated transmission scheduler 16 and outputs the modulated data signal to radio transmitter 21.

Preamble generator 20 generates a preamble signal on the basis of the scheduling information output from multi-AP coordinated transmission scheduler 16. Preamble generator 20 performs modulation and an IFFT on the preamble signal and outputs the modulated preamble signal to radio transmitter 21.

Radio transmitter 21 generates a radio frame (also referred to as a packet signal) by adding the preamble signal output from preamble generator 20 to the modulated data signal output from data modulator 19. Radio transmitter 21 performs a radio transmission process including digital-to-analog (D/A) conversion on the radio frame and up-conversion on a carrier frequency and transmits the signal subjected to the radio transmission process to a DL radio transmission apparatus or a DL radio reception apparatus through an antenna.

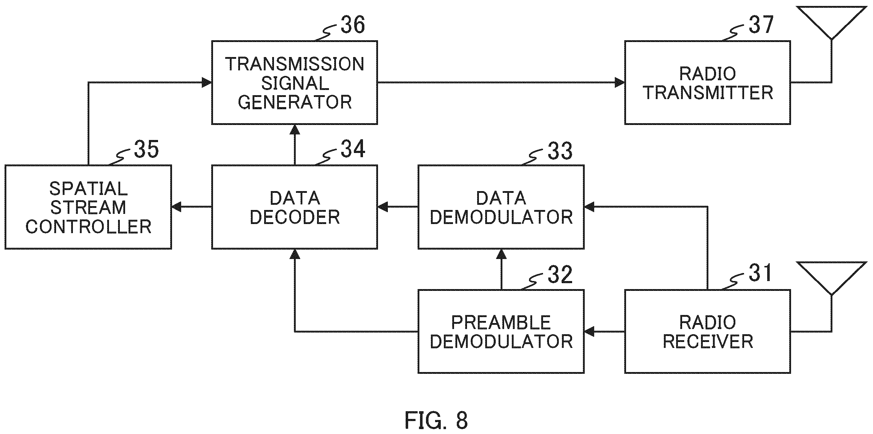

FIG. 8 is a diagram illustrating an example of a block configuration of another communication apparatus. The communication apparatus having the example of the block configuration illustrated in FIG. 8 is, for example, a DL radio reception apparatus such as an STA.

Radio receiver 31 receives a signal transmitted from a DL radio transmission apparatus through an antenna and performs a radio reception apparatus such as down-conversion and A/D conversion. Radio receiver 31 outputs a data signal extracted from the received signal subjected to the radio reception process to data demodulator 33 and a preamble signal extracted from the received signal to preamble demodulator 32.

Preamble demodulator 32 performs an FFT on the preamble signal output from radio receiver 31 to extract reception control information to be used to demodulate and decode the data. The reception control information includes, for example, information such as BW, MCS, and an error correcting code.

Preamble demodulator 32 performs channel estimation on the basis of a reference signal included in the preamble signal to obtain a channel estimation value. Preamble demodulator 32 outputs the reception control information to data demodulator 33 and data decoder 34 and the channel estimation value to data demodulator 33.

Data demodulator 33 performs an FFT on the data signal output from radio receiver 31 and demodulates the data signal using the reception control information and the channel estimation value output from preamble demodulator 32. Data demodulator 33 outputs the demodulated data signal to data decoder 34.

Data decoder 34 decodes the demodulated data signal output from data demodulator 33 using the reception control information output from preamble demodulator 32. Data decoder 34 performs an error check on the decoded data signal using a method such as a CRC. When there is no error in the decoded data signal, data decoder 34 outputs the decoded data signal to transmission signal generator 36 and spatial stream controller 35.

When data decoder 34 outputs the decoded data signal, spatial stream controller 35 extracts spatial stream allocation information in multi-AP coordinated transmission included in the decoded data signal and outputs the spatial stream allocation information to transmission signal generator 36.

Transmission signal generator 36 generates a data sequence including a response signal (an acknowledge (ACK) or a block ACK (BA)) on the basis of error check information output from data decoder 34. Transmission signal generator 36 generates a data signal by encoding the generated data sequence, allocating the data sequence to a certain frequency resource, and performing modulation and an IFFT on the data sequence.

Transmission signal generator 36 also determines an orthogonal matrix to be added to the reference signal included in the preamble signal on the basis of the spatial stream allocation information output from spatial stream controller 35. Transmission signal generator 36 adds the preamble signal to the data signal to generate a radio frame, and outputs the radio frame to radio transmitter 37.

Radio transmitter 37 performs a radio transmission process including D/A conversion and up-conversion into the carrier frequency on the radio frame output from transmission signal generator 36 and transmits the signal subjected to the radio transmission process to a DL radio transmission apparatus through an antenna.

### <Spatial Division C-SR>

In the present disclosure, as described in the above "Interference between Reference Signals", APs negotiate information regarding spatial streams to be used in each BSS in multi-AP coordinated transmission. A method for negotiating information regarding spatial streams (referred to as spatial division C-SR) will be described hereinafter in addition to transmission power control in C-SR. The negotiation may be performed, for example, in S7 and S9 described with reference to FIG. 6.

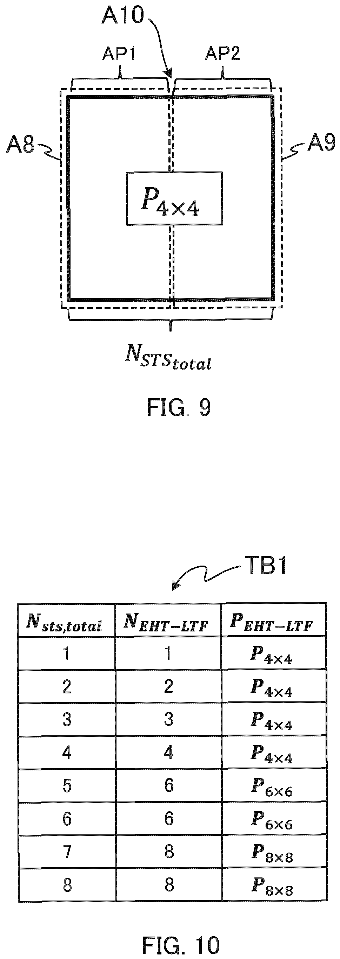

FIG. 9 is a diagram illustrating an example of spatial stream allocation in spatial division C-SR. FIG. 9 illustrates an example of a 4 × 4 orthogonal matrix (P-matrix) added (multiplied) to reference signals.

AP1 and AP2 negotiate information regarding spatial streams and determine an orthogonal matrix to be added to reference signals such as EHT-LTFs.

Reference signals used in spatial division C-SR and an orthogonal matrix to be added to the reference signals are determined on the basis of the total number of spatial streams "N_{sts,total}" to be used in the spatial division C-SR.

FIG. 10 is a diagram illustrating an example of the determination of reference signals and an orthogonal matrix. AP1 and AP2 each store table TB1 illustrated in FIG. 10. Table TB1 indicates a relationship between the total number of spatial streams (N_{sts,total}), the number of reference signals (N_{EHT-LTF}), and the P-matrix (P_{EHT-LTF}).

AP1 and AP2 determine a common P-matrix to be used in spatial division C-SR through a negotiation by referring to table TB1, which will be described later. AP1 and AP2 determine spatial streams to be allocated to AP1 and AP2 using the determined common P-matrix. For example, AP1 determines a component (e.g., broken-line frame A8 illustrated in FIG. 9) of the determined common P-matrix (the number of columns = the total number of spatial streams "N_{sts,total}") allocated thereto. AP2, too, determines a component (e.g., broken-line frame A9 illustrated in FIG. 9) of the determined common P-matrix allocated thereto.

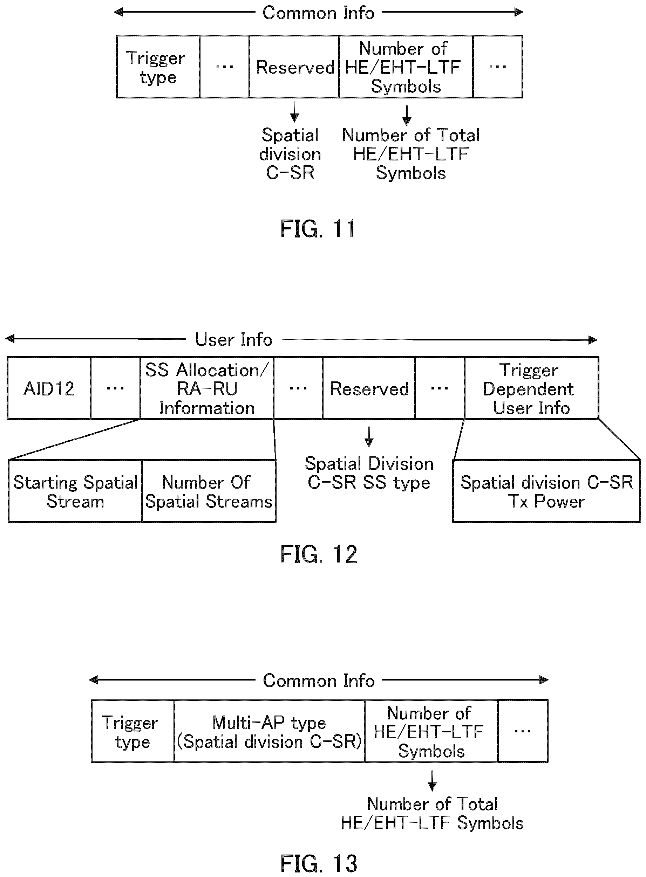

Control information regarding spatial division C-SR including the information regarding spatial streams may be included in a trigger frame (TF) and notified of. The control information regarding spatial division C-SR may be included in the multi-AP coordinated transmission control signal (S9) in FIG. 6, instead. A format of a TF will be described hereinafter with reference to FIGS. 11 to 13 as an example where the TF is used as a multi-AP coordinated transmission control signal.

FIG. 11 is a diagram illustrating an example of common information of a TF. As illustrated in FIG. 11, a basic TF may be used to notify of the control information regarding spatial division C-SR (an existing TF may be expanded).

The TF includes common information (Common Info) and user information (User Info). An AP may notify of whether the TF includes the control information regarding spatial division C-SR using the common information of the TF. That is, the AP may signal the control information regarding spatial division C-SR using a basic TF.

A Reserved subfield of the common information of the basic TF may be replaced by a Spatial division C-SR subfield for notifying of whether the control information regarding spatial division C-SR is included. The Reserved subfield replaced by the Spatial division C-SR subfield may be a 1-bit subfield.

In the case of the Spatial division C-SR subfield = 0, for example, the TF does not include the control information regarding spatial division C-SR. In the case of the Spatial division C-SR subfield = 1, the TF includes the control information regarding spatial division C-SR.

When the Spatial division C-SR subfield notifies that the TF includes the control information regarding spatial division C-SR, a Number of HE/EHT-LTF symbols subfield included in the common information may be replaced by a Number of Total HE/EHT-LTF symbols subfield for notifying of the total number of HE/EHT-LTFs (the total number of reference signals) in coordinated transmission. In the case of the Spatial division C-SR subfield = 1, for example, the Number of Total HE/EHT-LTF symbols subfield may be a subfield for notifying of the total number of HE/EHT-LTFs transmitted in spatial division C-SR.

The Number of Total HE/EHT-LTF symbols subfield may be regarded as an information field for a sharing AP and a shared AP to obtain a common P-matrix.

For example, AP1, which is the sharing AP, determines the total number of spatial streams to be used in spatial division C-SR on the basis of a certain criterion or request information notified of in S7 in FIG. 6 (request information from AP2, which is the shared AP). AP1 refers to table TB1 in FIG. 10 stored in a memory of AP1 and obtains a total number of HE/EHT-LTFs (P_{EHT-LTF} in FIG. 10) corresponding to the determined total number of spatial streams. The sharing AP includes the obtained total number of HE/EHT-LTFs (P_{EHT-LTF}) in the Number of Total HE/EHT-LTF symbols subfield and notifies AP2, which is the shared AP, of the total number of HE/EHT-LTFs.

AP2, which is the shared AP, refers to table TB1 in FIG. 10 stored in a memory of AP2 on the basis of the total number of HE/EHT-LTFs (P_{EHT-LTF}) notified of by the Number of Total HE/EHT-LTF symbols subfield and obtains a P-matrix.

As a result, the sharing AP and the shared AP can obtain a common P-matrix. As described with reference to FIG. 10, the sharing AP and the shared AP then determine spatial streams using the common P-matrix.

Although the Number of Total HE/EHT-LTF symbols subfield is a subfield for notifying of the total number of HE/EHT-LTFs in the above description, the Number of Total HE/EHT-LTF symbols subfield is not limited to this. The Number of Total HE/EHT-LTF symbols subfield may be a subfield for notifying of the total number of spatial streams, instead. The Number of Total HE/EHT-LTF symbols subfield may be regarded, through the total number of HE/EHT-LTFs or the total number of spatial streams, as a subfield for notifying of a P-matrix to be used in spatial division C-SR.

FIG. 12 is a diagram illustrating an example of the user information of the TF. When the Spatial division C-SR subfield of the common information of the TF notifies that the TF includes the control information regarding spatial division C-SR, the user information of the TF may notify of spatial stream allocation information for each AP/STA and transmission signal power of a spatial division C-SR signal.

An AID12 subfield of the user information includes information indicating a destination (destination apparatus) of the control information regarding spatial division C-SR. The information indicating the destination is, for example, an identifier of an AP/STA (communication apparatus).

The destination of the control information regarding spatial division C-SR is notified of a type of spatial stream information, which is notified of by an SS Allocation/RA-RU Information subfield (hereinafter also referred to as an SS Allocation subfield).

The destination may be notified of the type of spatial stream information, which is notified of by the SS Allocation subfield, using a Reserved subfield included in the user information, instead. The Reserved subfield may be a 1-bit subfield. The Reserved subfield may be referred to as a Spatial Division C-SR SS type subfield, instead.

In the case of the Spatial Division C-SR SS type subfield = 0, the SS Allocation subfield includes information regarding spatial streams to be used by the destination. In the case of the Spatial Division C-SR SS type subfield = 1, the SS Allocation subfield includes information regarding a range of spatial streams available to the destination.

The SS Allocation subfield includes a Starting Spatial Stream subfield and a Number Of Spatial Streams subfield. The Starting Spatial Stream subfield indicates start positions of spatial streams in a P-matrix, and the Number Of Spatial Streams subfield indicates the number of spatial streams.

Information included in the SS Allocation subfield may be regarded as information for extracting a part of the P-matrix. It is assumed, for example, that the destination (e.g., AID12 illustrated in FIG. 12) of the TF is AP2. In this case, the SS Allocation subfield included in the TF transmitted to AP2 includes information for extracting matrices (refer to broken-line frame A9 in FIG. 9) relating to AP2 from the P-matrix illustrated in FIG. 9.

More specifically, the start positions of the spatial streams in the Starting Spatial Stream subfield of the SS Allocation subfield indicate start points (e.g., refer to arrow A10 in FIG. 9) of columns for extracting the matrices relating to AP2 in the P-matrix, and the number of spatial streams in the Number Of Spatial Streams subfield indicates the number of spatial streams of AP2 included in the extracted matrices (e.g., refer to broken-line frame A9 in FIG. 9).

As described above, the Spatial Division C-SR SS type subfield = 0 indicates that the SS Allocation subfield includes information regarding spatial streams to be used by the destination. In the case of the Spatial Division C-SR SS type subfield = 0, therefore, the SS Allocation subfield includes start positions of spatial streams as many as the number of spatial streams allocated to the destination.

When the number of spatial streams allocated to AP2 is "2", for example, the SS Allocation subfield includes start positions of two spatial streams (two start columns for extracting two matrices from the P-matrix). That is, in the case of the Spatial Division C-SR SS type subfield = 0, the sharing AP (AP1) specifies the spatial streams to be used by the shared AP (AP2).

The Spatial Division C-SR SS type subfield = 1, on the other hand, indicates that the SS Allocation subfield includes the information regarding the range of spatial streams to be used by the destination. In the case of the Spatial Division C-SR SS type subfield = 1, therefore, the SS Allocation subfield includes a start position of one spatial stream.

For example, AP2 extracts one P-matrix from a common P-matrix using the start position of the one spatial stream notified of by the sharing AP and the number of spatial streams. AP2 autonomously (in accordance with a certain criterion set for AP2) determines the spatial stream to be used by AP2 using the extracted P-matrix. That is, in the case of the Spatial Division C-SR SS type subfield = 1, the sharing AP specifies a range of spatial streams available to AP2 (shared AP), and AP2 autonomously determines the spatial stream to be used within the range of spatial streams specified by the sharing AP.

The sharing AP, too, determines spatial streams (extraction of P-matrices) to be used thereby using a P-matrix common to the shared AP. For example, AP1, which is the sharing AP, determines extraction of broken-line frame A10 illustrated in FIG. 9.

The SS Allocation subfield may also include identifiers (SS IDs) for identifying spatial streams. In the case of the Spatial Division C-SR SS type subfield = 0, for example, the sharing AP determines an SS ID for each of spatial streams allocated to the shared AP. The SS IDs are associated with, for example, the start positions of the spatial streams in the Starting Spatial Stream subfield. As a result, the spatial streams with the SS IDs are specified for the shared AP. In the case of the Spatial Division C-SR SS type subfield = 1, on the other hand, the sharing AP specifies a range of SS IDs available to the shared AP, and the shared AP allocates (associates) SS IDs to the spatial streams determined thereby from the specified range of SS IDs. The SS IDs may also be referred to as spatial stream numbers.

Not the basic TF but a new TF for multi-AP may be used for the notification of the control information regarding spatial division C-SR. The new TF for multi-AP may be referred to as a multi-AP TF.

FIG. 13 is a diagram illustrating an example of common information of the multi-AP TF. The multi-AP TF includes the common information and user information (not illustrated). As illustrated in FIG. 13, the common information of the multi-AP TF includes a Multi-AP type subfield and a Number of HE/EHT symbols subfield.

The Multi-AP type subfield of the multi-AP TF notifies of a multi-AP coordinated transmission method. When spatial division C-SR is applied to a coordination group, for example, the Multi-AP type subfield of the multi-AP TF includes information indicating that spatial division C-SR is applied.

When the multi-AP type subfield notifies of application of spatial division C-SR, the Number of HE/EHT symbols subfield included in the common information of the multi-AP TF is replaced by Number of total HE/EHT symbols, which notifies of a total number of HE/EHT-LTFs in coordinated transmission in coordinated transmission.

When the Multi-AP type subfield notifies of application of spatial division C-SR, the user information of the multi-AP TF notifies of spatial stream allocation information for each AP/STA and transmission signal power of a spatial division C-SR signal as with the user information of the basic TF described with reference to FIG. 12.

An AP notified by a multi-AP TF of control information regarding spatial division C-SR transmits a spatial division C-SR signal to each of destination STAs. The AP includes spatial stream allocation information regarding the destination STAin user information (e.g., a User field of EHT-SIG) of the spatial division C-SR signal. In other words, the AP does not include, in the spatial division C-SR signal, spatial stream allocation information regarding destination STAs of another AP (referred to as coordinating AP) that transmits a spatial division C-SR signal at the same time.

In spatial division C-SR, transmission power control for reducing interference between signals transmitted by APs in coordinated transmission is performed, and reference signals are orthogonalized by adding a common orthogonal matrix component. As a result, interference caused by phase rotation that occurs between reference signals in coordinated transmission is reduced in spatial division C-SR. Since interference between reference signals is suppressed in spatial division C-SR, accuracy of channel estimation performed by a receiver improves, thereby improving system throughput.

### <Summary of Embodiment 1>

As described above, a communication apparatus negotiates with another communication apparatus in order to determine spatial streams to be used in coordinated transmission. The communication apparatus orthogonalizes reference signals included in signals in coordinated transmission on the basis of information regarding spatial streams obtained through the negotiation.

For example, the communication apparatus determines an orthogonal matrix on the basis of the total number of HE/EHT-LTFs obtained through the negotiation with another communication apparatus or the total number of spatial streams and orthogonalizes reference signals included in signals in coordinated transmission using the determined orthogonal matrix.

As a result, the communication apparatus can suppress interference between reference signals in coordinated transmission.

### <Variation 1>

In Variation 1, a range of spatial streams available to each AP and the total number of streams are negotiated in advance in coordinated transmission. For example, APs negotiate spatial stream allocation information in a coordination group to which the APs belong.

The coordination group includes, for example, an AP candidate set and a virtual BSS. The AP candidate set is a group of a plurality of APs. A sharing AP and a shared AP for performing multi-AP coordinated transmission are determined from the APs included in the AP candidate set. The virtual BSS is a group of a plurality of BSSs for performing multi-AP coordinated transmission. The coordination group may be a group of a plurality of APs or a group of a plurality of APs and a plurality of STAs.

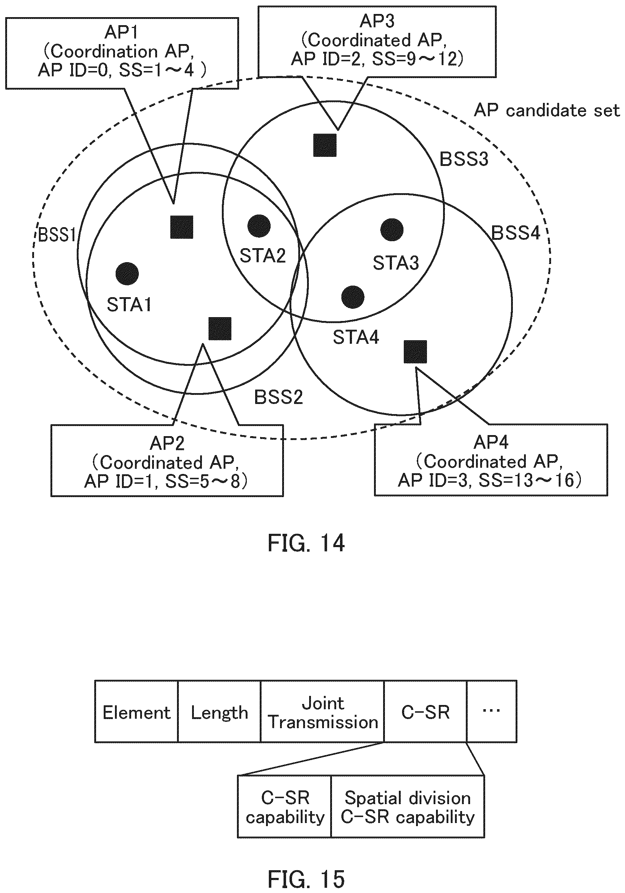

FIG. 14 is a diagram illustrating an example of configuration of a communication system according to Variation 1. AP1 to AP4 and STA1 to STA4 illustrated in FIG. 14 are included in one coordination group (certain coordination group) and negotiate information regarding spatial streams (spatial stream allocation information). In other words, AP1 to AP4 are included in the same AP candidate set and negotiate the information regarding spatial streams.

The AP candidate set includes an AP that takes the initiative in control of the coordination group. The AP that takes the initiative in the control of the coordination group may be referred to as a coordination AP. APs that follow the coordination AP may be referred to as coordinated APs. AP1 in FIG. 14, for example, may be a coordination AP. AP2 to AP4 may be coordinated APs.

The coordination AP may be a sharing AP or a shared AP.

The coordination AP allocates indices (e.g., AP IDs) to the APs belonging to the coordination group. The coordination AP allocates a range of spatial streams available to the APs belonging to the coordination group.

As illustrated in FIG. 14, for example, AP1, which is the coordination AP, allocates AP ID = 0 to 3 to each of AP1 to AP4 belonging to the coordination group. In addition, AP1, which is the coordination AP, allocates SS ID = 1 to 4 to AP1 belonging to the coordination group. AP1, which is the coordination AP, allocates SS ID = 5 to 8 to AP2 belonging to the coordination group. AP1, which is the coordination AP, allocates SS ID = 9 to 12 to AP3 belonging to the coordination group. AP1, which is the coordination AP, allocates SS ID = 13 to 16 to AP4 belonging to the coordination group.

The coordination AP includes the indices allocated to each AP, the range of spatial streams, and the total number of spatial streams in spatial division C-SR coordinated transmission in beacon signals or the like and transmits the beacon signals or the like to the coordinated APs.

The coordination AP also includes AP IDs and an available range of spatial streams in an association response signal or the like of the coordination group and notifies an AP that newly participates in the coordination group of the AP IDs and the available range of spatial streams.

When an AP belonging to the coordination group is notified of use of spatial division C-SR by a transmission signal (e.g., a multi-AP TF) from another AP belonging to the same coordination group, the AP schedules the number of spatial streams within the range of spatial streams allocated in advance. For example, the AP transmits a spatial division C-SR signal using a P-matrix corresponding to the total number of spatial streams.

In Variation 1, information regarding spatial streams is negotiated in advance in the coordination group. As a result, a communication apparatus need not notify of spatial stream information each time a transmission operation is performed in spatial division C-SR, thereby reducing information of which other communication apparatuses are to be notified. When control information regarding spatial division C-SR is transmitted using a TF, for example, the spatial stream information for each AP can be reduced from the user information of the TF described with reference to FIG. 12. In addition, since signaling volume of spatial division C-SR transmission can be reduced in Variation 1, system throughput improves.

In Variation 1, the coordination AP specifies a range of spatial streams for each coordinated AP, and the coordinated AP determines spatial streams to be used thereby within the specified range of spatial streams. Variation 1, therefore, may be regarded as an operation in the case of the Spatial Division C-SR SS type subfield = 1.

### <Variation 2>

In Variation 2, APs negotiate information regarding multi-AP coordinated transmission on the basis of processing capability of AP/STAs relating to spatial streams. The processing capability is, for example, capability information regarding each AP/STA.

An AP/STA includes capability information regarding spatial streams in a beacon or the like and notifies another AP of the capability information. For example, an STA transmits the capability information to an AP belonging to the same BSS. For example, an AP transmits the capability information to another AP belonging to the same coordination group.

FIG. 15 is a diagram illustrating an example of a signal (multi-AP coordination information element) for notifying of capability information. The signal for notifying of capability information regarding multi-AP coordinated transmission may be referred to as, for example, a multi-AP coordination information element. The multi-AP coordination information element includes capability information regarding each coordinated transmission method.

As illustrated in FIG. 15, a C-SR subfield includes capability information regarding two C-SR types, namely a C-SR capability subfield and a Spatial division C-SR capability subfield. The C-SR capability subfield and the Spatial division C-SR subfield may each be a 1-bit subfield.

The 1-bit subfield indicates whether the C-SR type of the corresponding subfield is supported by the AP/STA. In the case of the Spatial division C-SR subfield = 0, for example, it is notified that the AP/STA does not support spatial division C-SR. In the case of the Spatial division C-SR subfield = 1, it is notified that the AP/STA supports spatial division C-SR. In the case of the C-SR subfield = 0, it is notified that the AP/STA does not support C-SR. In the case of the C-SR subfield = 1, it is notified that the AP/STA supports C-SR.

An AP determines scheduling of spatial division C-SR on the basis of the capability information received from the AP/STA. For example, the AP determines destination scheduling of spatial division C-SR on the basis of the spatial division C-SR capability. When the number of STAs that support spatial division C-SR is larger than the number of STAs that do not support spatial division C-SR, for example, the AP determines that spatial division C-SR is to be used in multi-AP coordinated transmission.

The AP also determines an allowable reception interference level on the basis of spatial division C-SR capability and multiple-antenna cancelling (MAIC) capability. The allowable reception interference level may be, for example, an acceptable receiver interference level (ARIL).

When the STA supports MAIC and spatial division C-SR, for example, the AP increases the ARIL because MAIC is expected to have an effect of reducing interference. Although a generally used ARIL is a power value (e.g., signal-to-noise level (SNR)) that guarantees a packet error rate (PER) = 0.1, for example, the AP may use a power value that guarantees PER = 0.1 - α (α is any constant) when the STA supports MAIC and spatial division C-SR.

The AP also switches transmission power information notified of by the TF on the basis of whether the AP/STA supports spatial division C-SR.

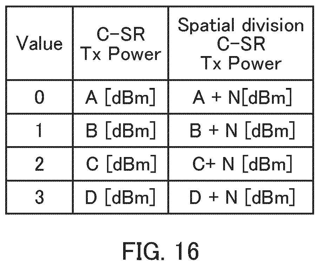

FIG. 16 is a diagram illustrating an example of a transmission power table. When transmission power in C-SR and spatial division C-SR is selected from a predefined table (a table where values (e.g., values in a subfield for notifying of transmission power information in C-SR and spatial division C-SR) and C-SR Tx power are associated with each other) (e.g., a Spatial Reuse subfield included in a preamble signal), the AP refers to the multi-AP coordinated transmission method and switches the transmission power depending on whether C-SR or spatial division C-SR is to be used.

When the multi-AP coordinated transmission method is C-SR, for example, the AP selects the transmission power in C-SR using the predefined table. When the multi-AP coordinated transmission method is spatial division C-SR, the AP selects transmission power obtained by adding N to the transmission power in C-SR in the predefined table (N is any constant). Since the accuracy of channel estimation improves as a result of orthogonalization of reference signals in spatial division C-SR, the transmission power in spatial division C-SR can be made larger than the transmission power in C-SR.

In Variation 2, a communication apparatus refers to capability information regarding a receiver and takes into consideration an effect of reducing interference based on a method (e.g., MAIC) other than multi-AP coordinated transmission. As a result, the communication apparatus can transmit a spatial division C-SR signal with transmission power smaller than in C-SR, thereby suppressing interference with another communication apparatus.

In addition, the communication apparatus refers to the multi-AP coordinated transmission method (C-SR or spatial division C-SR) and makes the transmission power in spatial division C-SR than in C-SR. As a result, the communication apparatus can improve quality of communication with a destination terminal. In addition, since spatial division C-SR reduces interference with non-destination terminals, system throughput improves.

### <Variation 3>

In Variation 3, communication apparatuses negotiate spatial stream information for each of frequency resources. The frequency resources may be provided as 20 MHz channels. The frequency resources are not limited to the same frequency band. For example, the communication apparatuses may negotiate spatial stream information in a 5 GHz band and a 6 GHz band.

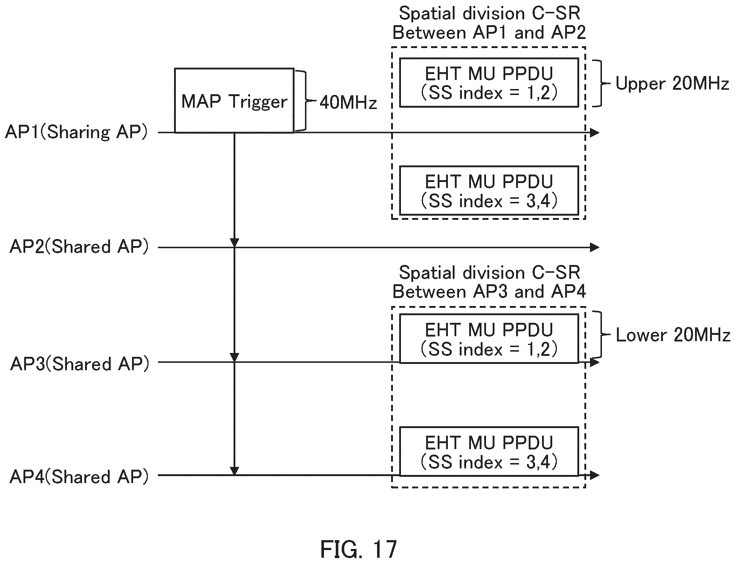

FIG. 17 is a diagram illustrating an example of a negotiation of spatial stream information for each frequency resource. In FIG. 17, AP1, which is a sharing AP, notifies AP2 to AP4 of frequency resource information and spatial stream allocation information using user information of a TF (e.g., a multi-AP TF).

For example, AP1, which is the sharing AP, notifies AP2 that AP1 and AP2 are to perform spatial division C-SR transmission with STAs through an upper 20 MHz channel of a frequency band of 40 MHz. In addition, AP1 notifies AP3 and AP4 that AP3 and AP4 are to perform spatial division C-SR transmission with STAs through a lower 20 MHz channel of the frequency band of 40 MHz.

When different frequency resources are used to perform spatial division C-SR as described above, the same spatial stream numbers may be allocated to a plurality of APs. In FIG. 17, for example, AP1 an AP3 may use spatial stream numbers 1 and 2, and AP2 and AP4 may use spatial stream numbers 3 and 4.

Spatial stream information is allocated to the frequency resources, for example, for every 20 MHz channel band. After receiving a TF from AP1, each AP performs spatial division C-SR transmission using the frequency resources notified of by the trigger frame.

In Variation 3, the communication apparatuses negotiate spatial stream information for each frequency resource. As a result, the communication apparatuses can perform communication based on frequency-division multiplexing, simultaneously perform a plurality of spatial division C-SR transmission operations, and improve system throughput.

### <Embodiment 2>

In Embodiment 2, a plurality of APs and a plurality of STAs perform UL multi-AP coordinated transmission. A method where two APs communicate control signals relating to multi-AP coordinated transmission with each other, negotiate information regarding spatial streams to be used in UL multi-AP coordinated transmission, and notify other APs and STAs of the information, for example, will be described hereinafter.

An example of configuration of a communication system according to Embodiment 2 is the same as that illustrated in FIG. 5, and description thereof is omitted.

### <Example of Sequence>

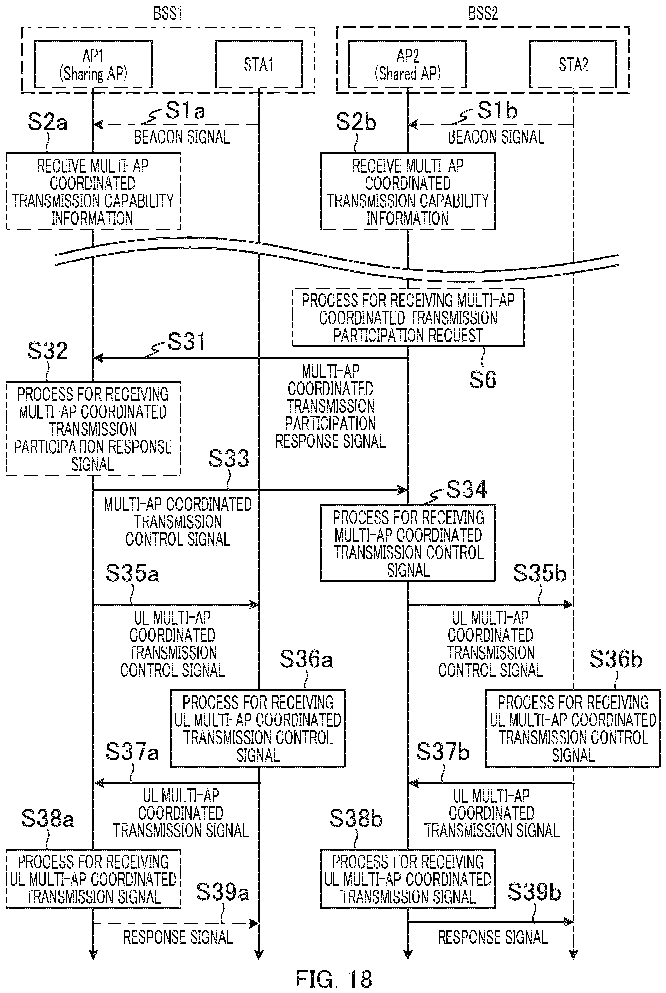

FIG. 18 is a sequence diagram illustrating an example of operation of the communication system according to Embodiment 2. Processing from S1a and S1b to S6 in FIG. 18 is the same as that from S1a and S1b to S6 described with reference to FIG. 6, and description thereof is omitted.

AP2 transmits, to AP1, a multi-AP coordinated transmission participation response signal including a result of a determination whether to participate in multi-AP coordinated transmission (S31). At this time, AP2 may include a communication direction (DL/UL) of coordinated transmission and request information regarding a multi-AP coordinated transmission method in the multi-AP coordinated transmission participation response signal. When including spatial division C-SR, which will be described later, in the request information, AP2 may include information regarding the number of spatial streams to be transmitted in the multi-AP coordinated transmission.

AP1 performs a process for receiving the multi-AP coordinated transmission participation response signal (S32), determines the multi-AP coordinated transmission method from information regarding APs that can participate in the multi-AP coordinated transmission, and schedules coordination signals. The multi-AP coordinated transmission method may be spatial division C-SR, C-SR, JT, CBF, COFDMA, CTDMA, or the like.

AP1 transmits the multi-AP coordinated transmission control signal including a result of the scheduling to AP2 (S33).

The multi-AP coordinated transmission control signal includes, for example, a communication direction (DL/UL) of coordinated transmission, destination information regarding the multi-AP coordinated transmission signal, resource information regarding resources available to each AP, information regarding weighting on amplitude and a phase of the coordinated transmission signal, transmission signal power information, and transmission timing information. When spatial division C-SR is performed in UL multi-AP coordinated transmission, the multi-AP coordinated transmission control signal includes power information (available transmission power and allowable interference) for each AP and available spatial stream information. The multi-AP coordinated transmission control signal may be included in a trigger frame (e.g., FIG. 11 or 12) or an MAP trigger frame (e.g., FIG. 13) and transmitted.

AP2 receives the multi-AP coordinated transmission control signal transmitted from AP1 (S34).

The AP performs scheduling for an STA to transmit a UL signal on the basis of the resource information and the like notified of by the multi-AP coordinated transmission control signal and transmits a UL multi-AP coordinated transmission signal to the subordinate STA (S35a and S35b). The UL multi-AP coordinated transmission control signal includes, for example, resource information for each STA, transmission signal power, and transmission timing information. The UL multi-AP coordinated transmission control signal may be, for example, included in a trigger frame and transmitted.

The STA performs a process for receiving the UL multi-AP coordinated transmission control signal (S36a and S36b) and transmits a UL multi-AP coordinated transmission signal (e.g., a TB PPDU) on the basis of the resource information notified of by the user information transmitted thereto (S37a and S37b).

The AP performs a process for receiving the UL multi-AP coordinated transmission signal (S38a and S38b).

When there is no error in the received signal, the AP transmits a response signal to the STA that has transmitted the multi-AP coordinated transmission signal (e.g., an acknowledge (ACK) or a block ACK (BA)) (S39a and S39b).

### <Example of Block Configuration of Communication Apparatus>

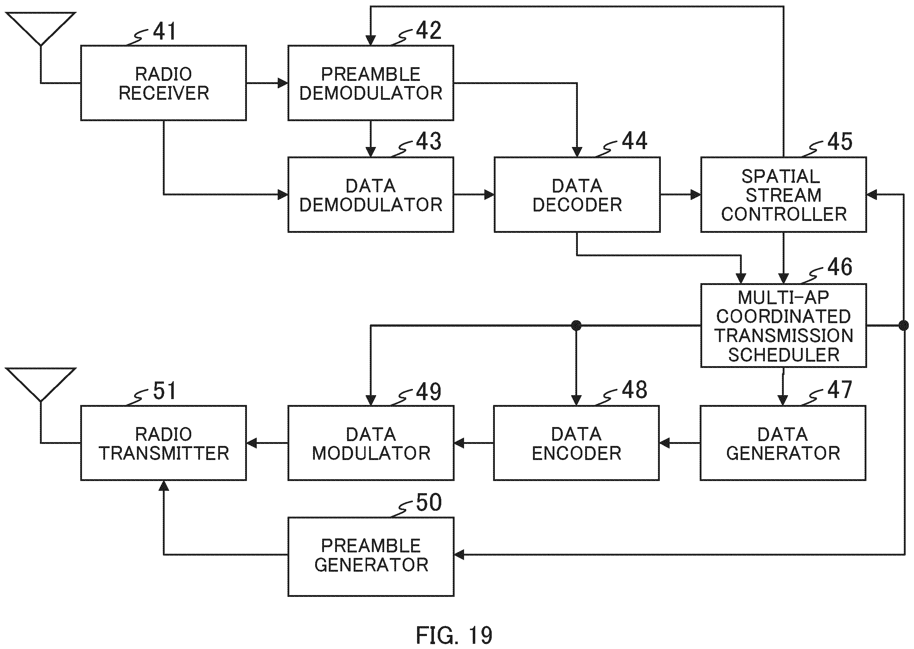

FIG. 19 is a diagram illustrating an example of a block configuration of a communication apparatus. The communication apparatus having the example of the block configuration illustrated in FIG. 19 is, for example, a UL radio reception apparatus such as an AP.

Radio receiver 41 receives a signal transmitted from a DL radio transmission apparatus or a DL radio reception apparatus (e.g., an STA) through an antenna and performs a radio reception process including down-conversion and A/D conversion. Radio receiver 41 divides a signal subjected to the radio reception process into a preamble signal and a data signal and outputs the preamble signal to preamble demodulator 42 and the data signal to data demodulator 43.

Preamble demodulator 42 performs Fourier transform FFT on the preamble signal output from radio receiver 41 to extract reception control information to be used to demodulate and decode the data signal. The reception control information includes, for example, information such as BW, MCS, and an error correcting code.

Preamble demodulator 42 also performs, on the basis of spatial stream allocation information regarding a UL radio transmission apparatus output from spatial stream controller 45, channel estimation using a reference signal (e.g., a non-legacy LTF) included in the preamble signal to obtain a channel estimation value. Preamble demodulator 42 outputs the reception control information to data demodulator 43 and data decoder 44 and the channel estimation value to data demodulator 43.

Data demodulator 43 performs an FFT on the data signal output from radio receiver 41 and demodulates the data signal using the reception control information and the channel estimation value output from preamble demodulator 42. Data demodulator 43 outputs the demodulated data signal to data decoder 44.

Data decoder 44 decodes the demodulated data signal output from data demodulator 43 using the reception control information output from preamble demodulator 42. Data decoder 44 performs an error check on the decoded data signal using a method such as CRC. When there is no error in the decoded data signal, data decoder 44 outputs the decoded data signal to spatial stream controller 45 and multi-AP coordinated transmission scheduler 46.

When there is no error in the decoded data and the decoded data includes spatial stream information regarding multi-AP coordinated transmission, data decoder 44 outputs the spatial stream information to spatial stream controller 45. The spatial stream information includes, for example, capability information regarding spatial streams and spatial stream numbers available in each multi-AP coordinated transmission method.

When the decoded data signal output from data decoder 44 includes capability information regarding spatial streams in multi-AP coordinated transmission, spatial stream controller 45 determines spatial stream numbers available to another AP in multi-AP coordinated transmission and outputs the spatial stream numbers to multi-AP coordinated transmission scheduler 46.

When the decoded data signal output from data decoder 44 includes available spatial stream information, spatial stream controller 45 saves the available spatial stream information in a buffer.

When coordinated transmission scheduling information output from multi-AP coordinated transmission scheduler 46 includes spatial stream allocation information for the UL radio transmission apparatus, spatial stream controller 45 saves the spatial stream information in the buffer. When the decoded data output from data decoder 44 includes information for requesting transmission based on multi-AP coordinated transmission, spatial stream controller 45 outputs the available spatial stream information saved in the buffer to multi-AP coordinated transmission scheduler 46.

Multi-AP coordinated transmission scheduler 46 determines scheduling information regarding the coordinated transmission. For example, multi-AP coordinated transmission scheduler 46 determines a multi-AP coordinated transmission method, user information regarding users who participate in the coordinated transmission, resource information regarding resources available to each user (e.g., frequency resources and spatial stream resources), transmission power information, MCS, and an error correcting code.

Multi-AP coordinated transmission scheduler 46 also determines allocation of spatial streams for each of APs that participate in the multi-AP coordinated transmission on the basis of spatial stream numbers available to each AP in the coordinated transmission output from spatial stream controller 45.

Multi-AP coordinated transmission scheduler 46 also determines allocation of spatial streams to be used by the UL radio transmission apparatus in FIG. 19 in the multi-AP coordinated transmission on the basis of the available spatial stream information output from spatial stream controller 45.

Multi-AP coordinated transmission scheduler 46 outputs coordination signal scheduling information to data generator 47, data encoder 48, data modulator 49, preamble generator 50, and spatial stream controller 45.

Data generator 47 generates a data sequence to be transmitted to a UL radio reception apparatus or a UL radio transmission apparatus on the basis of the coordination signal scheduling information output from multi-AP coordinated transmission scheduler 46. The data sequence transmitted to the UL radio reception apparatus includes, for example, a beacon signal including multi-AP coordinated transmission capability information, a multi-AP coordinated transmission participation request signal, a multi-AP coordinated transmission participation response signal, and a multi-AP coordinated transmission control signal. The data sequence transmitted to the UL radio transmission apparatus includes, for example, control information for requesting transmission of a UL multi-AP coordinated transmission signal. Data generator 47 transmits the generated data sequence to data encoder 48.

Data encoder 48 encodes the data sequence output from data generator 47 on the basis of the coordination signal scheduling information output from multi-AP coordinated transmission scheduler 46 and outputs the encoded data to data modulator 49.

Data modulator 49 performs demodulation and an IFFT on the encoded data signal output from data encoder 48 on the basis of the coordination signal scheduling information output from multi-AP coordinated transmission scheduler 46 and outputs the modulated data signal to radio transmitter 51.

Preamble generator 50 generates a preamble signal on the basis of the scheduling information output from multi-AP coordinated transmission scheduler 46. Preamble generator 50 performs modulation and an IFFT on the preamble signal and outputs the preamble signal to radio transmitter 51.

Radio transmitter 51 generates a radio frame by adding the preamble signal output from preamble generator 50 to the modulated data signal output from data modulator 49. Radio transmitter 51 performs a radio transmission process including D/A conversion on the radio frame and up-conversion on a carrier frequency and transmits the signal subjected to the radio transmission process to a UL radio reception apparatus or a UL radio transmission apparatus through an antenna.

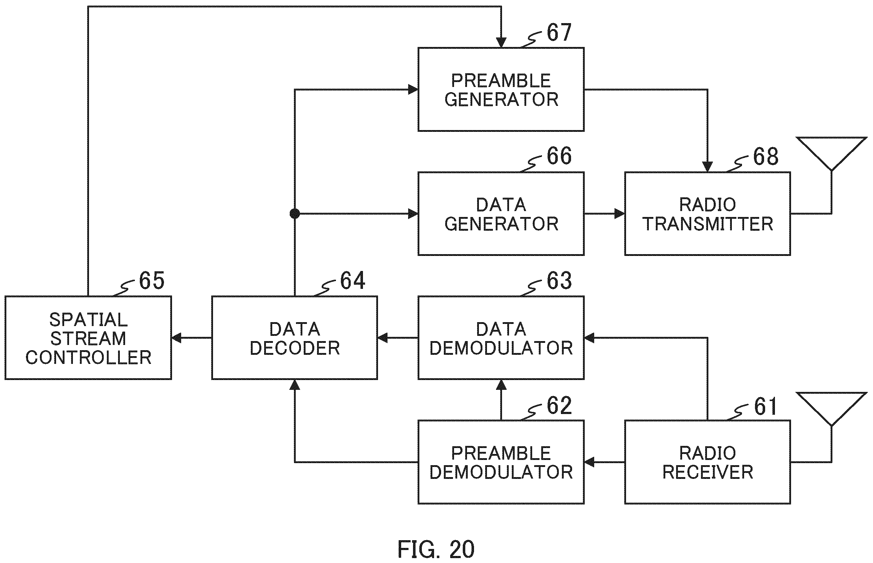

FIG. 20 is a diagram illustrating an example of a block configuration of another communication apparatus. The communication apparatus having the example of the block configuration illustrated in FIG. 20 is, for example, a UL radio reception apparatus such as an STA.

Radio receiver 61 receives a signal transmitted from a DL radio transmission apparatus through an antenna and performs a radio reception process such as down-conversion and A/D conversion. Radio receiver 61 outputs a data signal extracted from the received signal subjected to the radio reception process to data demodulator 63 and a preamble signal extracted from the received signal to preamble demodulator 62.

Preamble demodulator 62 performs an FFT on the preamble signal output from radio receiver 61 to extract reception control information used to demodulate and decode the data. The reception control information includes, for example, information such as BW, MCS, and an error correcting code.

Preamble demodulator 62 performs channel estimation on the basis of a reference signal included in the preamble signal to obtain a channel estimation value. Preamble demodulator 62 outputs the reception control information to data demodulator 63 and data decoder 64 and the channel estimation value to data demodulator 63.

Data demodulator 63 performs an FFT on the data signal output from radio receiver 61 and demodulates the data signal using the reception control information and the channel estimation value output from preamble demodulator 62. Data demodulator 63 outputs the demodulated data signal to data decoder 64.

Data decoder 64 decodes the demodulated data signal output from data demodulator 63 using the reception control information output from preamble demodulator 62. Data decoder 64 performs an error check on the decoded data signal using a method such as a CRC. When there is no error in the decoded data signal, data decoder 64 outputs the decoded data signal to spatial stream controller 65, data generator 66, and preamble generator 67.

When data decoder 64 outputs the decoded data signal, spatial stream controller 65 extracts spatial stream allocation information in UL multi-AP coordinated transmission signal control information included in the decoded data signal and outputs the spatial stream allocation information to preamble generator 67.

When the decoded data signal output from data decoder 64 includes UL multi-AP coordinated transmission signal control information, data generator 66 generates a data sequence to be transmitted to the UL radio reception apparatus on the basis of the UL multi-AP coordinated transmission signal control information. Data generator 66 generates a data signal by encoding the generated data sequence, allocating the data sequence to a certain frequency resource, and performing modulation and an IFFT on the data sequence. Data generator 66 outputs the generated data signal to radio transmitter 68.

When the decoded data signal output from data decoder 64 includes UL multi-AP coordinated transmission signal control information, preamble generator 67 generates a preamble signal on the basis of the UL multi-AP coordinated transmission signal control information.

Preamble generator 67 also determines an orthogonal matrix to be added to a reference signal included in the preamble signal on the basis of the spatial stream allocation information output from spatial stream controller 65 and adds the orthogonal matrix to the reference signal. Preamble generator 67 performs modulation and an IFFT on the preamble signal and outputs the preamble signal to radio transmitter 68.

Radio transmitter 68 generates a radio frame by adding the preamble signal output from preamble generator 67 to the data signal output from data generator 66. Radio transmitter 68 performs a radio transmission process including D/A conversion on the radio frame and up-conversion on a carrier frequency and transmits the signal subjected to the radio transmission process to the UL radio reception apparatus through an antenna.

### <Summary of Embodiment 2>

As described above, an AP negotiates with another AP in order to determine spatial streams to be used in UL coordinated transmission. The AP transmits information regarding the spatial streams obtained through the negotiation to an STA. The STA orthogonalizes reference signals included in UL coordinated transmission signals on the basis of the information regarding the spatial streams. As a result, the STA can suppress interference between the reference signals in UL coordinated transmission.

### <Embodiment 3>

In Embodiment 3, an AP changes transmission timing of a reference signal such as an EHT-LTF or a non-legacy LTF using a TF.

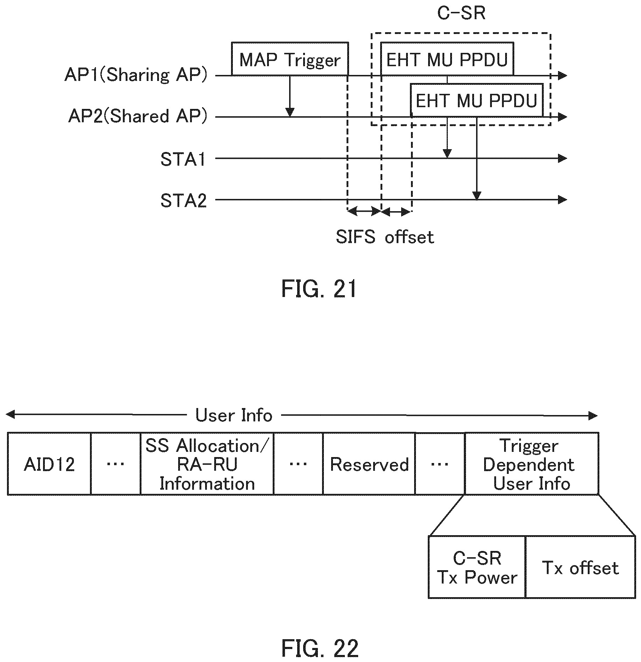

FIG. 21 is a diagram illustrating an example of a change of transmission timing using a TF according to Embodiment 3. FIG. 22 is a diagram illustrating an example of user information of the TF.

As illustrated in FIG. 21, AP1 (sharing AP) includes offset information regarding transmission timing of a C-SR signal in an MAP TF and notifies AP2 (shared AP) of the offset information.

As illustrated in FIG. 22, the sharing AP includes the offset information in a Trigger dependent User Info subfield of User Info of the MAP TF and notifies the shared AP of the offset information.

Upon receiving the MAP TF including the offset information, the AP transmits, on the basis of the offset information notified of by the user information, the C-SR signal to an STA "Short Interframe Space (SIFS) + offset" after the reception of the MAP TF (refer to SIFS and offset in FIG. 21).

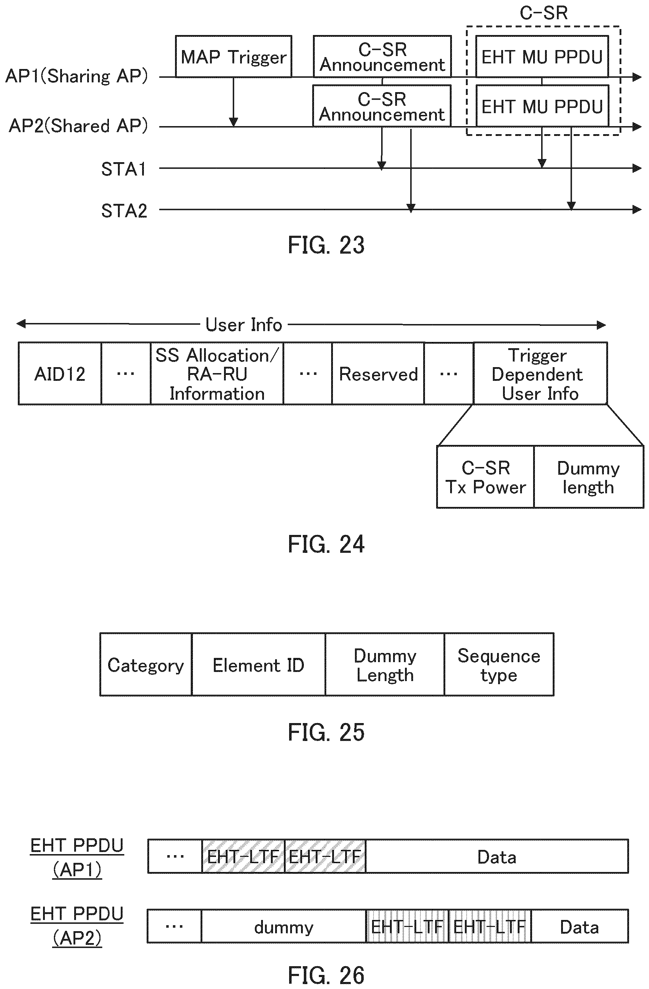

Offset may be determined such that, for example, a reference signal of AP1 and a reference signal of AP2 do not overlap each other. As illustrated in FIG. 26, for example, offset may be determined such that an EHT-LTF of AP1 and an EHT-LTF of AP2 do not overlap each other.

### <Summary of Embodiment 3>

As described above, a communication apparatus determines transmission timing of a reference signal included in a coordinated transmission signal transmitted by another communication apparatus. The communication apparatus transmits information regarding the determined transmission timing to the other communication apparatus. As illustrated in FIG. 21, for example, AP1 determines transmission timing of a reference signal included in a C-SR signal transmitted by AP2 and transmits information regarding the determined transmission timing to AP2.

As a result, overlap between a reference signal transmitted by a communication apparatus and a reference signal transmitted by another communication apparatus is avoided, thereby suppressing interference between the reference signals.

### <Variation 1>

In Variation 1, length of a reference signal is changed using a TF, and timing of overlap between reference signals is shifted.

FIG. 23 is a diagram illustrating an example of timing of frames. FIG. 24 is a diagram illustrating an example of user information of a TF. FIG. 25 is a diagram illustrating an example of a C-SR announcement frame. FIG. 26 is a diagram illustrating an example of C-SR signals.

As illustrated in FIG. 23, AP1 (sharing AP) includes length information regarding a reference signal of a C-SR signal in an MAP TF and notifies AP2 (shared AP) of the length information.

As illustrated in FIG. 24, the sharing AP includes the length information regarding the reference signal in a dummy length subfield of User Info of the MAP TF and notifies the shared AP of the length information.

Upon receiving the MAP TF including the length information regarding the reference signal, the AP transmits the length information regarding the reference signal included in the dummy length subfield of the received MAP TF to a destination STA of the C-SR signal. For example, upon receiving the MAP TF including the length information regarding the reference signal, the AP includes the length information regarding the reference signal in the C-SR announcement frame illustrated in FIG. 25 and transmits the C-SR announcement frame to the destination STA of the C-SR signal.

Upon receiving the MAP TF including the length information regarding the reference signal, the AP generates a C-SR signal including a dummy field before a reference signal on the basis of the length information included in the dummy length subfield of the MAP TF. For example, as indicated by "dummy" in FIG. 26, upon receiving the MAP TF including the length information regarding the reference signal, the AP may copy data having a length equal to that notified of by the dummy length subfield from an end of Data of the C-SR signal and include the copy at a top of the reference signal.

Alternatively, EHT-STFs having a length equal to that notified of by the dummy length subfield may be copied as the dummy field of the C-SR signal and included at the top of the reference signal.

Upon receiving the C-SR signal, the STA performs channel estimation using the reference signal except for the dummy field on the basis of the dummy length subfield notified of by the C-SR announcement frame.

In Variation 1, transmission timing of a reference signal included in a C-SR signal is changed using a dummy signal. As a result, a communication apparatus can reduce an effect of interference caused by phase rotation that occurs between reference signals, thereby improving accuracy of channel estimation.

### <Embodiment 4>

In Embodiment 4, an AP adds a different sequence to a reference signal for each of AP/STAs.

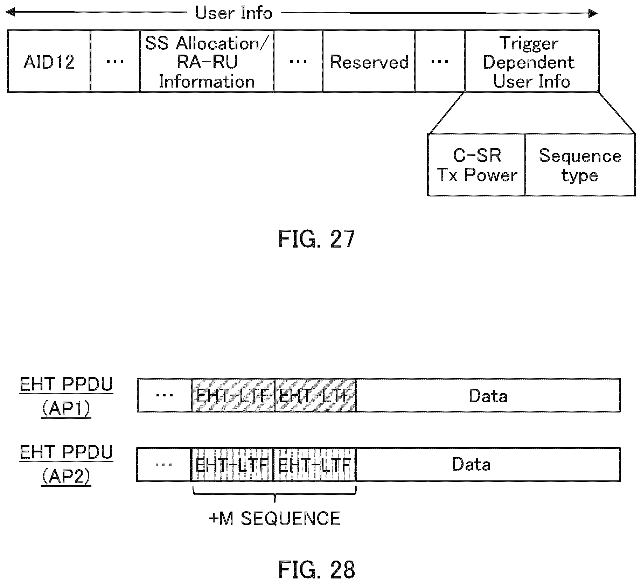

FIG. 27 is a diagram illustrating an example of user information of a TF according to Embodiment 4. FIG. 28 is a diagram illustrating an example of a C-SR signal.

As illustrated in FIG. 27, a sharing AP includes sequence information to be added to a C-SR signal in a Sequence type subfield of a Trigger dependent User Info subfield of an MAP TF and notifies a shared AP of the sequence information. Upon receiving the MAP TF including the sequence information, the AP includes the sequence information in a Sequence type subfield of a C-SR announcement frame as illustrated in FIG. 25 and transmits the C-SR announcement frame to a destination STA of the C-SR signal.

The shared AP adds a sequence to the reference signal as illustrated in FIG. 28 on the basis of the sequence information and transmits the C-SR signal to the STA. The sequence notified of by the Sequence type subfield may be, for example, a Maximum (M) sequence or a Zadoff-Chu (ZC) sequence.

Upon receiving the C-SR signal, the STA performs channel estimation using the sequence information notified of by the C-SR announcement frame and the reference signal.

### <Summary of Embodiment 4>

As described above, a communication apparatus determines a sequence to be added to a reference signal and transmits the determined sequence to another communication apparatus. AP1 determines information regarding a sequence to be added to a C-SR signal and transmits the information to AP2.

As a result, the communication apparatus and the other communication apparatus can add different sequences to reference signals, and interference between the reference signal transmitted by the communication apparatus and the reference signal transmitted by the other communication apparatus can be suppressed.

Embodiments have been described.

### <Others>

Although an example where information regarding spatial streams is negotiated in C-SR has been described in Embodiment 1, a multi-AP coordinated transmission method for which information regarding spatial streams is negotiated is not limited to this. The negotiation of information regarding spatial streams (spatial division negotiation) may be applied to another multi-AP coordinated transmission method, instead. For example, the spatial division negotiation may be applied to JT, CMIMO, or CBF, instead.

Although an example of synchronous transmission C-SR (or TF-based C-SR) has been described in Embodiment 1, spatial division C-SR need not necessarily be applied to this. For example, spatial division C-SR may be applied to asynchronous transmission C-SR, where transmission timing of a C-SR signal differs between APs, instead. In this case, each AP transmits the C-SR signal at the transmission timing thereof in accordance with negotiated spatial stream allocation information.

Although EHT PPDUs are taken as an example of a transmission format of spatial division C-SR and a method for avoiding interference between EHT-LTFs, which are reference signals of the EHT PPDUs, has been described in Embodiment 1, spatial division C-SR is not limited to this. For example, spatial division C-SR may be applied to a successor standard of 11be, instead.

In Embodiment 1, capability information regarding spatial division C-SR may be notified of within a multi-AP coordinated transmission period (e.g., within a TXOP notified of by a transmission signal of a sharing AP) or outside the multi-AP coordinated transmission period.

In Variation 1 of Embodiment 1, a coordination AP that controls a coordination group may be the same AP as a sharing AP that controls multi-AP coordinated transmission. Alternatively, the sharing AP may be selected from coordinated APs. Alternatively, a sharing AP may be changed for each coordinated transmission operation, or the same AP may serve as a sharing AP throughout a plurality of coordinated transmission operations.

The above embodiments and variations may be combined together. For example, what is disclosed in the Embodiment 1 may be applied to Embodiment 2.

Radio receiver 11, 31, 41, or 61 and radio transmitter 21, 37, 51, or 68 may be achieved by a communicator. The components other than radio receiver 11, 31, 41, or 61 and radio transmitter 21, 37, 51, or 68 may be achieved by a controller such as a processor.

In the above-described embodiments, the expressions "processor," "-er," "-or," and "-ar" used for the component elements may be replaced with other expressions such as "circuit (circuitry)," "assembly," "device," "unit," or "module."

Although the embodiments have been described above with reference to the drawings, the present disclosure is not limited to such examples. It is clear that a person skilled in the art is capable of conceiving variations and modifications within the scope of the claims. It is understood that such variations or modifications also fall within the technical scope of the present disclosure. Further, the component elements in the embodiments may be arbitrarily combined without departing from the spirit of the present disclosure. In addition, variations in the embodiments may be combined arbitrarily.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

When future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a radio LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A communication apparatus according to one example of the present disclosure includes: a control circuit that negotiates with another communication apparatus in order to determine a spatial stream to be used in coordinated transmission; and a communication circuit that performs the coordinated transmission with the other communication apparatus, in which the control circuit orthogonalizes a reference signal included in a signal in the coordinated transmission based on information regarding the spatial stream obtained through the negotiation.

In one example of the present disclosure, the information may be a total number of a plurality of the spatial streams.

In one example of the present disclosure, the information is allocation information regarding allocation of the spatial stream.

In one example of the present disclosure, the information is a spatial stream number of the spatial stream.

In one example of the present disclosure, the information is an available range of the spatial streams.

In one example of the present disclosure, the spatial stream is allocated for each destination communication apparatus in the coordinated transmission.

In one example of the present disclosure, the spatial stream is determined based on processing capability of a destination communication apparatus in the coordinated transmission.

In one example of the present disclosure, the control circuit negotiates with the other communication apparatus belonging to a group to which the communication apparatus belongs and a destination communication apparatus in the coordinated transmission.

In one example of the present disclosure, the control circuit controls power in the coordinated transmission based on processing capability of a destination communication apparatus in the coordinated transmission.

In one example of the present disclosure, the control circuit negotiates for each frequency resource.

A communication method according to one example of the present disclosure includes: negotiating with another communication apparatus in order to determine a spatial stream to be used in coordinated transmission; and orthogonalizing a reference signal included in a signal in the coordinated transmission based on information regarding the spatial stream obtained through the negotiating.

A communication apparatus according to one example of the present disclosure includes: a control circuit that determines transmission timing of a second reference signal such that a first reference signal included in a coordinated transmission signal transmitted by the communication apparatus and the second reference signal do not overlap each other, the second reference signal being included in a coordinated transmission signal transmitted by another communication apparatus; and a communication circuit that transmits information regarding the determined transmission timing to the other communication apparatus.

A communication method according to one example of the present disclosure is a method used by a communication apparatus, the communication method including: determining transmission timing of a second reference signal such that a first reference signal included in a coordinated transmission signal transmitted by the communication apparatus and the second reference signal do not overlap each other, the second reference signal being included in a coordinated transmission signal transmitted by another communication apparatus; and transmitting information regarding the determined transmission timing to the other communication apparatus.

A communication apparatus according to one example of the present disclosure includes: a control circuit that determines a sequence to be added to a reference signal included in a coordinated transmission signal; and a communication circuit that transmits information regarding the determined sequence to another communication apparatus.

A communication method according to one example of the present disclosure includes: determining a sequence to be added to a reference signal included in a coordinated transmission signal; and transmitting information regarding the determined sequence to another communication apparatus.

The disclosure of Japanese Patent Application No. 2022-016414, filed on February 4, 2022, including the specification, drawings and abstract, is incorporated herein by reference in its entirety.

### Industrial Applicability

An aspect of the present disclosure is effective for a radio communication system in IEEE 801.11.

### Reference Signs List

11, 31, 41, 61 Radio receiver
12, 32, 42, 62 Preamble demodulator
13, 33, 43, 63 Data demodulator
14, 34, 44, 64 Data decoder
15, 35, 45, 65 Spatial stream controller
16, 46 Scheduler
17, 47, 66 Data generator
18, 48 Data encoder
19, 49 Data modulator
20, 50, 67 Preamble generator
21, 37, 51, 68 Radio transmitter
36 Transmission signal generator

## Claims

1. A communication apparatus, comprising:
a control circuit that negotiates with another communication apparatus in order to determine a spatial stream to be used in coordinated transmission; and
a communication circuit that performs the coordinated transmission with the other communication apparatus, wherein
the control circuit orthogonalizes a reference signal included in a signal in the coordinated transmission based on information regarding the spatial stream obtained through the negotiation.

2. The communication apparatus according to claim 1, wherein
the information is a total number of a plurality of the spatial streams.

3. The communication apparatus according to claim 1, wherein
the information is allocation information regarding allocation of the spatial stream.

4. The communication apparatus according to claim 1, wherein
the information is a spatial stream number of the spatial stream.

5. The communication apparatus according to claim 1, wherein
the information is an available range of the spatial streams.

6. The communication apparatus according to claim 1, wherein
the spatial stream is allocated for each destination communication apparatus in the coordinated transmission.

7. The communication apparatus according to claim 1, wherein
the spatial stream is determined based on processing capability of a destination communication apparatus in the coordinated transmission.

8. The communication apparatus according to claim 1, wherein
the control circuit negotiates with the other communication apparatus belonging to a group to which the communication apparatus belongs and a destination communication apparatus in the coordinated transmission.

9. The communication apparatus according to claim 1, wherein
the control circuit controls power in the coordinated transmission based on processing capability of a destination communication apparatus in the coordinated transmission.

10. The communication apparatus according to claim 1, wherein
the control circuit negotiates for each frequency resource.

11. A communication method, comprising:
negotiating with another communication apparatus in order to determine a spatial stream to be used in coordinated transmission; and
orthogonalizing a reference signal included in a signal in the coordinated transmission based on information regarding the spatial stream obtained through the negotiating.

12. A communication apparatus, comprising:
a control circuit that determines transmission timing of a second reference signal such that a first reference signal included in a coordinated transmission signal transmitted by the communication apparatus and the second reference signal do not overlap each other, the second reference signal being included in a coordinated transmission signal transmitted by another communication apparatus; and
a communication circuit that transmits information regarding the determined transmission timing to the other communication apparatus.

13. A communication method used by a communication apparatus, the communication method comprising:
determining transmission timing of a second reference signal such that a first reference signal included in a coordinated transmission signal transmitted by the communication apparatus and the second reference signal do not overlap each other, the second reference signal being included in a coordinated transmission signal transmitted by another communication apparatus; and
transmitting information regarding the determined transmission timing to the other communication apparatus.

14. A communication apparatus, comprising:
a control circuit that determines a sequence to be added to a reference signal included in a coordinated transmission signal; and
a communication circuit that transmits information regarding the determined sequence to another communication apparatus.

15. A communication method, comprising:
determining a sequence to be added to a reference signal included in a coordinated transmission signal; and
transmitting information regarding the determined sequence to another communication apparatus.
